# EUROPÄISCHE PATENTSCHRIFT

(11) **EP 2 715 246 B1**
(45) Veröffentlichungstag und Bekanntmachung des Hinweises auf die Patenterteilung: **08.07.2015**
(21) Anmeldenummer: 12723459.9
(22) Anmeldetag: 23.05.2012
(51) Int. Cl.: F24J 2/46, F24J 2/50, F24J 2/24

(54) **SONNENKOLLEKTOR**
SOLAR COLLECTOR
CAPTEUR SOLAIRE

(30) Priorität: 28.05.2011 DE 202011101229 U
(43) Veröffentlichungstag der Anmeldung: 09.04.2014
(73) Patentinhaber: Robert Bosch GmbH, 70442 Stuttgart (DE)
(72) Erfinder: DANNE, Thomas, 71634 Ludwigsburg (DE); DECH, Frederik, 70197 Stuttgart (DE); CLEMENT, Uwe, 73114 Schlat (DE)
(86) Internationale Anmeldenummer: PCT/EP2012/059544
(87) Internationale Veröffentlichungsnummer: WO 2012/163746

(56) Entgegenhaltungen:
- AU-A4- 2010 100 962
- DE-U1-202009 004 581
- GB-A- 2 457 701
- US-A- 4 436 085

## Beschreibung

Die Erfindung betrifft einen Sonnenkollektor zur Gewinnung von Wärmenergie, insbesondere zum Einsatz auf Dächern und an Fassaden, nach dem Oberbegriff des Schutzanspruches 1. Ein solcher Sonnenkollektor ist in der DE 202 009 004 581 U offenbart.

Sonnenkollektoren dienen zur Gewinnung von Wärmeenergie für die Gebäudeheizung oder Warmwasserbereitung. Sie bestehen in der Regel aus einem Kollektorrahmen zum Einfassen einer Glasabdeckung und zur Aufnahme einer Kollektorwanne mit integrierter Wärmedämmung, Be- und Entlüftungsöffnungen für den Innenraum sowie einem Absorber mit einem Absorberblech und darunter verlaufenden Strömungskanälen für ein Wärmeträgermedium, in der Regel in Form einer Rohrharfe oder eines Rohrmäanders, dessen Anschlussrohrleitungen an mindestens zwei Stellen die Kollektorwanne durchdringen.

Neben diesen komplett vormontierten, anschlussfertigen Sonnenkollektoren sind Selbstbausätze für Sonnenkollektoren bekannt, die vollständig aus Einzelteilen bestehen. Abgestimmt auf die jeweilige Einbausituation werden diese Einzelteile dann vor Ort angepasst und mit entsprechendem Aufwand in vielen Einzelschritten montiert. Die Montage ist mit einem großen Zeitaufwand verbunden und zudem ist besonders die Handhabung des Rahmens weiterhin aufwändig, da relativ lange Profilteile transportiert und dann auch fachund sachgerecht an den Ecken verbunden werden müssen.

Bekannt sind bei Ausführungen von größeren Kollektorflächen prinzipiell großflächigere Einzelteile, wie Glasabdeckungen, Absorberbleche, oder Kollektorwannen. Dabei versucht man, die vorhandene Konstruktion, beispielsweise von Dach oder Fassade, möglichst zu nutzen. Ausführungsbeispiele sind in der DE 32 01 618 A1, der DE 31 08 356 A1 oder der DE 33 45 614 A1 enthalten. Dazu werden allerdings immer verschiedene abgestimmte Befestigungs- und/oder Randverbundteile benötigt, die an die jeweilige spezielle Einbausituation angepasst sein müssen.

Für die Anwendung in Ein- und Mehrfamilienhäusern, zur Warmwasseraufbereitung und Heizungsunterstützung, werden im Allgemeinen sogenannte Flachkollektoren verwendet. Die einzelnen Kollektormodule haben typischerweise eine Fläche von mehr als zwei Quadratmetern und ein Gewicht von etwa 40 Kilogramm. Durch die großen Abmessungen und das hohe Gewicht sind Transport und Montage der Module eventuell umständlich. Des Weiteren ist für die Installation einer solchen Anlage ein gewisses Fachwissen erforderlich. In den meisten Fällen wird der Aufbau solcher Anlagen daher von Fachpersonal durchgeführt.

Der Erfindung liegt die Aufgabe zugrunde, einen einfach aufgebauten, kostengünstig herstellbaren und einfach transportierbaren Sonnenkollektor zum Einsatz auf Dächern und an Fassaden zu schaffen.

Erfindungsgemäß wurde dies mit den Merkmalen des Schutzanspruches 1 gelöst. Vorteilhafte Weiterbildungen sind den Unteransprüchen zu entnehmen.

Gekennzeichnet ist der Sonnenkollektor durch eine Gestaltung als Bausatz, im Wesentlichen bestehend aus Abdeckung, Absorber und flexiblem Gehäuse als zusammenzufügende Einzelteile und mindestens einer weiteren Verpackungseinheit mit Isolierschaum als Hilfsmittel, welcher zum Befüllen über mindestens einen Anschluss am Gehäuse und Ausformen des Gehäuses vorgesehen ist.

In einer bevorzugten Ausführungsform ist die Abdeckung mindestens einmal geteilt und an der Verbindungsstelle mit einem elastischen, flexiblen Koppelelement für die Teile der Abdeckung versehen. Dabei ist die geteilte Abdeckung vorzugsweise klappbar gestaltet, wobei die Teile der Abdeckung übereinander liegend und somit kompakt zu transportieren sind.

Das flexible Gehäuse ist schlauchartig gestaltet und besitzt mindestens eine Hohlkammer. Dabei ist das flexible Material aus der Gruppe der Textilien, Kunststoffe oder Elastomere ausgewählt. Weiterhin weist das flexible Gehäuse mindestens einen Anschluss zur Schaumeinbringung sowie Durchführungen für den Absorber auf. Vorteilhafterweise ist das schlauchartige Gehäuse zumindest im oberen Randbereich so elastisch, dass das Gehäuse über den Rand der Abdeckung stülpbar ist und diese fixiert.

Alternativ dazu greift das schlauchartige Gehäuse in einer alternativen Ausführungsform an der Innenseite mit einer angeformten Rille im oberen Randbereich über den Rand der Abdeckung und fixiert diese im ausgeschäumten Zustand.

In einer weiteren bevorzugten Ausführungsform besteht der Absorber aus einer harfenartigen Fluidführung sowie einer Absorbergrundplatte, wobei die Anschlüsse des Absorbers passend zu den Durchführungen des Gehäuses ausgeführt sind. Vorzugsweise ist der Absorber ganz oder in Teilbereichen zusammenrollbar oder steif gestaltet. Die einstückige Vorfertigung des Absorbers ist genauso möglich wie eine Ausführung als Bausatz mit Einzelteilen.

Mit der erfindungsgemäßen Anordnung vereinfacht sich der Aufbau eines Sonnenkollektors zum Einsatz auf Dächern und an Fassaden. Kern der Erfindung ist es, einen solarthermischen Kollektor als Bausatz zu konzipieren. Dieser Bausatz besteht aus drei Hauptkomponenten, nämlich dem Gehäuse, der Abdeckung und dem Absorber. Zusätzlich beinhaltet der Bausatz eine oder mehrere Dosen mit Isolierschaum. Die drei Hauptkomponenten sind zusammenfaltbar und kompakt ausgeführt für ein möglichst kleines Transportvolumen. Nach dem Zusammenfügen aller Hauptkomponenten wird dem Gehäuse mittels des Isolierschaums am Installationsort die Form gegeben. Der Schaum sorgt für die Stabilität der Konstruktion und dient gleichzeitig zur thermischen Isolation des Sonnenkollektors. Durch die Erfindung ergeben sich klare Vorteile im Vergleich zu konventionellen solarthermischen Kollektoren, weil durch die zusammenfaltbaren Hauptkomponenten der Bausatz leicht zu transportieren ist. Auch der Zusammenbau des Bausatzes gestaltet sich durch die vorgefertigten Hauptkomponenten einfach, da mit dem Fügen der Hauptkomponenten die Gesamtanordnung vorgeformt wird. Dabei können durch die speziellen, schlüssigen Gestaltungsmerkmale der Komponenten Montagefehler und vergessene Teile ausgeschlossen werden. Folglich kann auch eine relativ unerfahrene Person die Sonnenkollektoren transportieren und montieren, wodurch die Fertigungskosten und natürlich die Gesamtkosten für die Beschaffung eines solarthermischen Systems signifikant reduziert werden.

Die Zeichnung stellt ein Ausführungsbeispiel der Erfindung dar. Es zeigt:
- Fig. 1:: eine Abdeckung eines Sonnenkollektors,
- Fig. 2:: ein Gehäuse eines Sonnenkollektors,
- Fig. 3:: einen Absorber eines Sonnenkollektors,
- Fig. 4:: Montageschritt 1 mit dem Auseinanderklappen der Abdeckung und dem Ausbreiten des Gehäuses,
- Fig. 5:: Montageschritt 2 mit dem Einlegen des Absorbers in das Gehäuse,
- Fig. 6:: Montageschritt 3 mit dem Einfädeln der Abdeckung in eine vorgesehene Lasche
- Fig. 7:: Montageschritt 4 mit dem Schäumen und
- Fig. 8:: eine Ausführungsvariante des Gehäuses mit einer die Abdeckung umfassenden Rille im montierten und ausgeschäumten Zustand.

Der Sonnenkollektor als Bausatz besteht aus einer transparenten Abdeckung 1, vorzugsweise einer Glasscheibe, einem Absorber 2 mit Strömungskanälen für ein Wärmeträgermedium sowie einem flexiblen Gehäuse 3. Als weiterer Bestandteil des Bausatzes ist mindestens eine Verpackungseinheit mit Isolierschaum vorgesehen, welcher zum Befüllen und Ausformen des Gehäuses 3 dient.

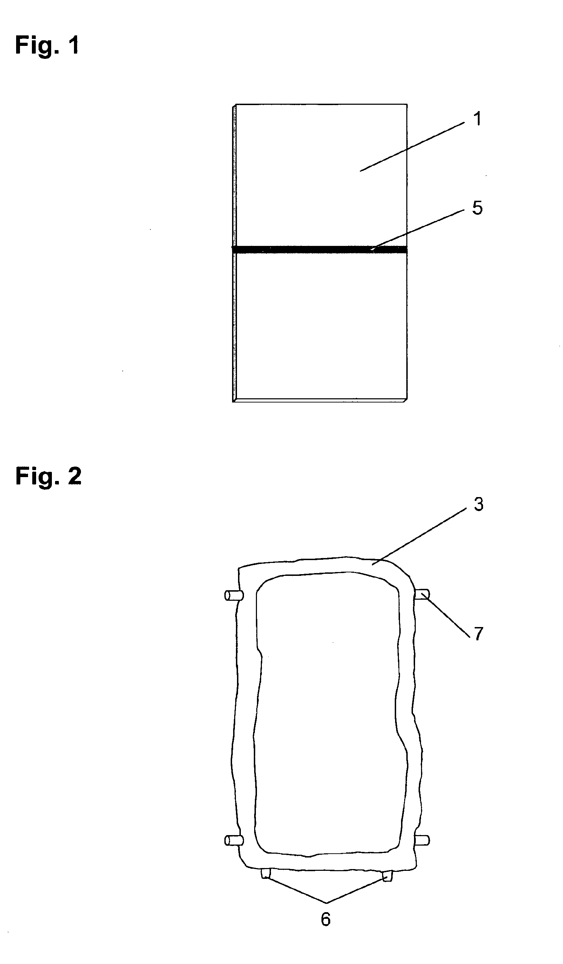

Die Abdeckung 1 gemäß Fig. 1 besteht aus zwei Teilen und ist an der Verbindungsstelle mit einem elastischen, flexiblen Koppelelement 5 für die Teile der Abdeckung 1 versehen, so dass die Abdeckung 1 beim Transport zusammengeklappt werden kann.

Das flexible Gehäuse 3 gemäß Fig. 2 ist schlauchartig gestaltet und besitzt mindestens eine Hohlkammer, mindestens einen Anschluss 6 zur Schaumeinbringung sowie Durchführungen 7 für den Absorber 2 bzw. dessen Anschlüsse 8.

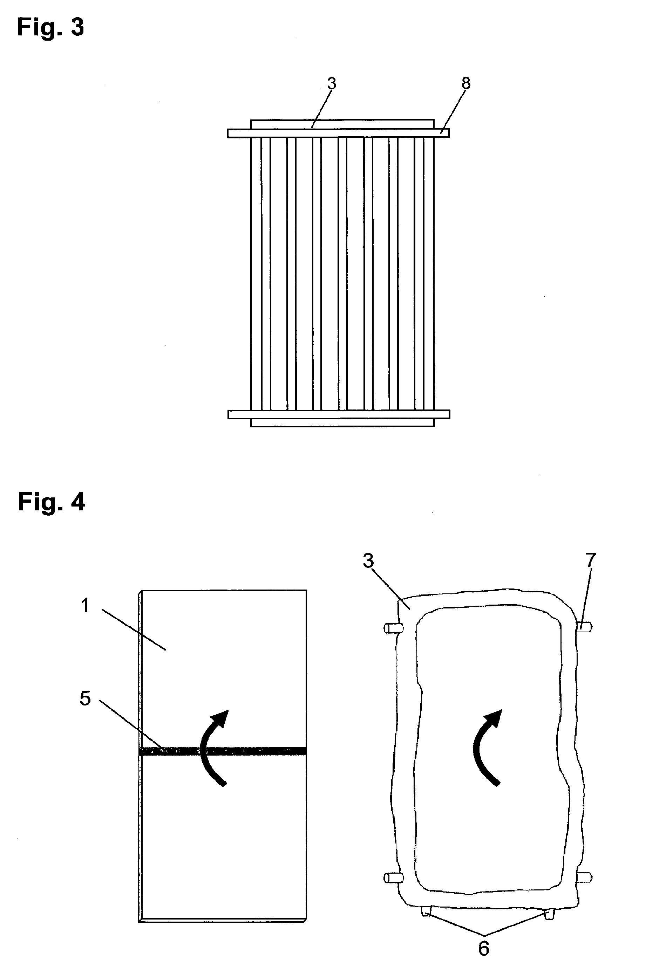

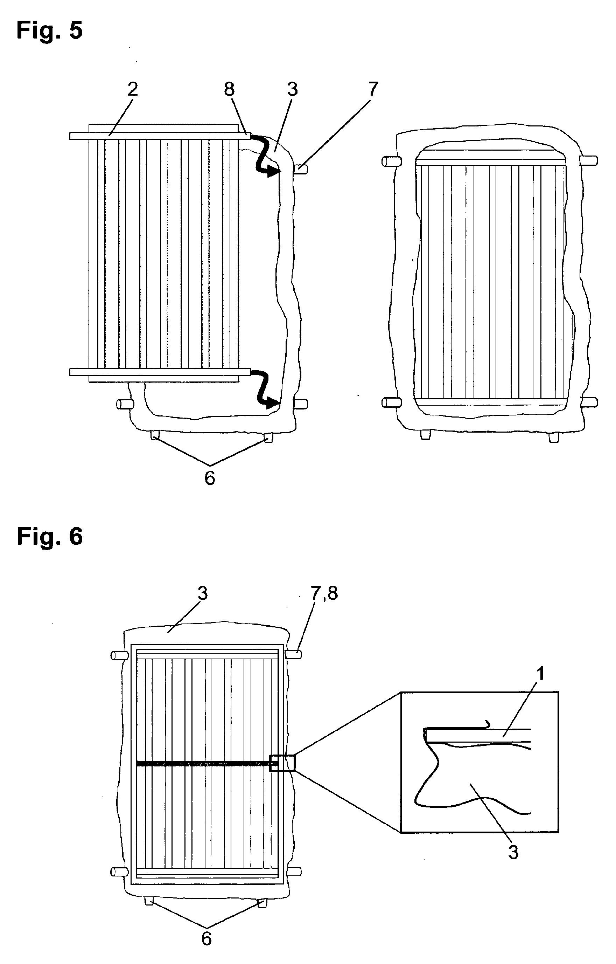

Nach einem ersten Montageschritt gemäß Fig. 4 mit dem Auffalten von Abdeckung 1 und Absorber 2 erfolgt in Montageschritt 2 gemäß Fig. 5 das Einlegen des Absorbers 2 in das schlauchartige Gehäuse 3, welches zumindest im oberen Randbereich so elastisch ist, dass sich dieser Randbereich, gemäß Fig. 6 und Montageschritt 3, insbesondere Vergrößerung, über den Rand der Abdeckung 1 stülpen lässt und diese fixiert.

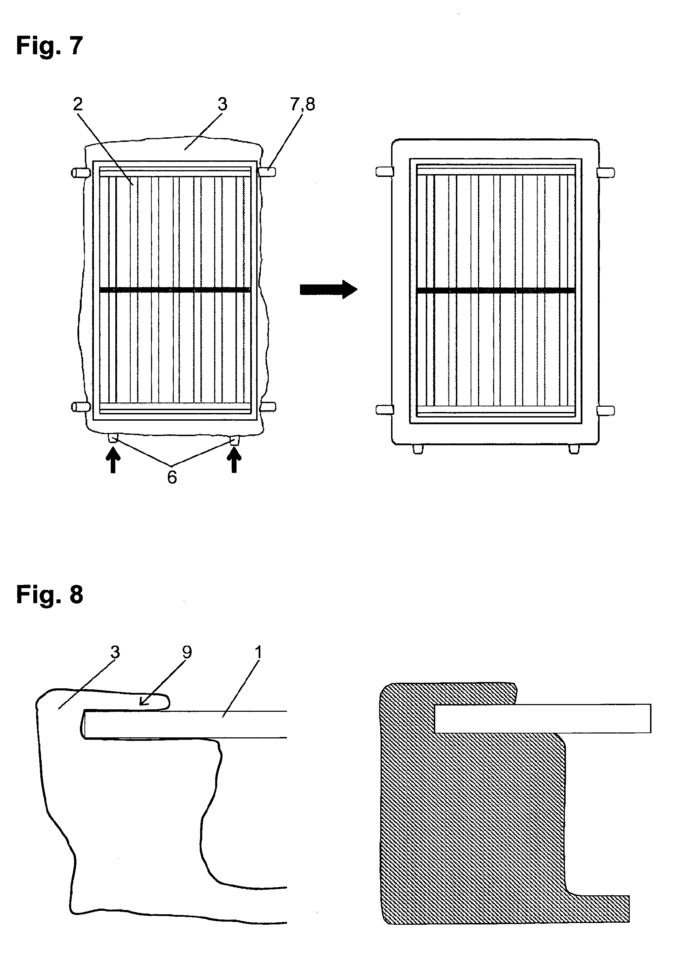

Gemäß Fig. 7 wird mit dem Einbringen des Schaums durch den Anschluss 6 in Montageschritt 4 die endgültige Geometrie des Sonnenkollektors hergestellt, indem sich das flexible Gehäuse 3 mit der Schaumausbreitung strafft, weil es von innen her ausgefüllt wird. Dieser Endzustand ist aus der rechten Abbildung der Fig. 4 erkennbar.

Eine weitere Methode zum Fixieren der Abdeckung 1 ist schematisch in Fig. 8 gezeigt. Hierbei wird der obere Randbereich des Gehäuses 3 an der Innenseite mit einer Rille 9 so ausgeführt, dass ein gewisser Bereich oberhalb der Rille 9 über der Abdeckung 1 ebenfalls mit Isolierschaum aufgefüllt wird. Hierdurch klemmt das ausgeschäumte Gehäuse 3 gemäß der rechten Abbildung die Abdeckung 1 ein und sichert sie so in der Position über dem Absorber 2.

## Patentansprüche

1. Sonnenkollektor zur Gewinnung von Wärmenergie mit einer transparenten Abdeckung (1), einem Absorber (2) mit mindestens einem Strömungskanal für ein Wärmeträgermedium sowie einem Gehäuse (3),
**gekennzeichnet durch** eine Gestaltung als Bausatz mit den zusammenzufügenden Einzelteilen aus Abdeckung (1), Absorber (2) und flexiblem Gehäuse (3) und mindestens einer Verpackungseinheit mit dem Hilfsmittel Isolierschaum, welches zum Befüllen über mindestens einen Anschluss (6) und Ausformen des Gehäuses (3) vorgesehen ist.

2. Sonnenkollektor nach Anspruch 1,
**dadurch gekennzeichnet, dass** die Abdeckung (1) mindestens einmal geteilt und an der Verbindungsstelle mit einem elastischen, flexiblen Koppelelement (5) für die Teile der Abdeckung (1) versehen ist.

3. Sonnenkollektor nach den Ansprüchen 1 oder 2,
**dadurch gekennzeichnet, dass** die mindestens einmal geteilte Abdeckung (1) klappbar gestaltet ist, wobei die Teile der Abdeckung (1) übereinander zu transportieren sind.

4. Sonnenkollektor nach einem der Ansprüche 1 bis 3,
**dadurch gekennzeichnet, dass** das flexible Gehäuse (3) schlauchartig gestaltet ist und mindestens eine Hohlkammer besitzt, wobei das flexible Material aus der Gruppe der Textilien, Kunststoffe oder Elastomere ausgewählt ist.

5. Sonnenkollektor nach einem der Ansprüche 1 bis 4,
**dadurch gekennzeichnet, dass** das schlauchartige Gehäuse (3) mindestens einen Anschluss (6) zur Schaumeinbringung sowie Durchführungen (7) für den Absorber (2) aufweist.

6. Sonnenkollektor nach einem der Ansprüche 1 bis 5,
**dadurch gekennzeichnet, dass** das schlauchartige Gehäuse (3) zumindest im oberen Randbereich so elastisch ist, dass das Gehäuse (3) über den Rand der Abdeckung (1) stülpbar ist und diese fixiert.

7. Sonnenkollektor nach einem der Ansprüche 1 bis 6,
**dadurch gekennzeichnet, dass** das schlauchartige Gehäuse (3) an der Innenseite mit einer angeformten Rille (9) im oberen Randbereich über den Rand der Abdeckung (1) greift und diese im ausgeschäumten Zustand fixiert.

8. Sonnenkollektor nach einem der Ansprüche 1 bis 7,
**dadurch gekennzeichnet, dass** der Absorber (2) aus einer harfenartigen Fluidführung sowie einer Absorbergrundplatte besteht, wobei die Anschlüsse (8) des Absorbers (2) passend zu den Durchführungen (7) des Gehäuses (3) ausgeführt sind.

9. Sonnenkollektor nach einem der Ansprüche 1 bis 8,
**dadurch gekennzeichnet, dass** der Absorber (2) ganz oder in Teilbereichen zusammenrollbar oder steif und wahlweise als Bausatz ausgeführt ist.

## Claims

1. Solar collector for obtaining thermal energy, comprising a transparent covering (1), an absorber (2) with at least one flow duct for a heat carrier medium, and a housing (3), **characterized by** being configured as a kit comprising the individual parts to be joined together consisting of covering (1), absorber (2) and flexible housing (3), and at least one packaging unit with insulating foam as an auxiliary which is intended for filling via at least one connection (6) and for forming the housing (3).

2. Solar collector according to Claim 1, **characterized in that** the covering (1) is divided at least once and is provided at the connection point with an elastic, flexible coupling element (5) for the parts of the covering (1).

3. Solar collector according to Claim 1 or 2, **characterized in that** the covering (1) which is divided at least once is designed to be foldable, wherein the parts of the covering (1) are to be transported over one another.

4. Solar collector according to one of Claims 1 to 3, **characterized in that** the flexible housing (3) is of tubular design and has at least one hollow chamber, wherein the flexible material is selected from the group consisting of textiles, plastics and elastomers.

5. Solar collector according to one of Claims 1 to 4, **characterized in that** the tubular housing (3) has at least one connection (6) for introducing foam and lead-throughs (7) for the absorber (2).

6. Solar collector according to one of Claims 1 to 5, **characterized in that** the tubular housing (3) is of such elasticity, at least in the upper edge region, that the housing (3) can be pulled over the edge of the covering (1) and fixes the latter.

7. Solar collector according to one of Claims 1 to 6, **characterized in that** the tubular housing (3) engages, on the inner side with an integrally formed groove (9) in the upper edge region, over the edge of the covering (1) and fixes the latter in the fully foamed state.

8. Solar collector according to one of Claims 1 to 7, **characterized in that** the absorber (2) comprises a harp-like fluid guide and an absorber baseplate, wherein the connections (8) of the absorber (2) are configured to match the lead-throughs (7) of the housing (3).

9. Solar collector according to one of Claims 1 to 8, **characterized in that** the absorber (2) can be rolled up completely or in portions or is rigid and is optionally configured as a kit.

## Revendications

1. Capteur solaire pour obtenir de l'énergie thermique, comprenant un recouvrement transparent (1), un absorbeur (2) comprenant au moins un canal d'écoulement pour un milieu caloporteur ainsi qu'un boîtier (3),
**caractérisé par** une configuration en tant que kit de construction comprenant, en tant que parties individuelles à assembler, un recouvrement (1), un absorbeur (2) et un boîtier flexible (3) et au moins une unité d'emballage comprenant, en tant que moyens auxiliaires, une mousse isolante, laquelle est prévue pour le remplissage par le biais d'au moins un raccord (6) et le façonnage du boîtier (3).

2. Capteur solaire selon la revendication 1, **caractérisé en ce que** le recouvrement (1) est divisé au moins une fois et est pourvu, au point de liaison, d'un élément d'accouplement élastique flexible (5) pour les parties du recouvrement (1).

3. Capteur solaire selon la revendication 1 ou 2, **caractérisé en ce que** le recouvrement (1) divisé au moins une fois est configuré de manière rabattable, les parties du recouvrement (1) devant être transportées les unes sur les autres.

4. Capteur solaire selon l'une quelconque des revendications 1 à 3,
**caractérisé en ce que** le boîtier flexible (3) est configuré en forme de tuyau et comporte au moins une chambre creuse, le matériau flexible étant sélectionné dans le groupe des textiles, des plastiques ou des élastomères.

5. Capteur solaire selon l'une quelconque des revendications 1 à 4,
**caractérisé en ce que** le boîtier (3) en forme de tuyau comprend au moins un raccord (6) pour l'introduction de mousse ainsi que des passages (7) pour l'absorbeur (2).

6. Capteur solaire selon l'une quelconque des revendications 1 à 5,
**caractérisé en ce que** le boîtier (3) en forme de tuyau est élastique au moins dans la région de bord supérieure, de telle sorte que le boîtier (3) puisse être enfoncé par-dessus le bord du recouvrement (1) et fixe celui-ci.

7. Capteur solaire selon l'une quelconque des revendications 1 à 6,
**caractérisé en ce que** le boîtier (3) en forme de tuyau vient en prise, sur le côté intérieur, par une rainure façonnée (9) dans la région de bord supérieure, sur le bord du recouvrement (1) et fixe celui-ci dans l'état garni de mousse.

8. Capteur solaire selon l'une quelconque des revendications 1 à 7,
**caractérisé en ce que** l'absorbeur (2) est constitué d'un guide de fluide en forme de rampe ainsi que d'une plaque de base d'absorbeur, les raccords (8) de l'absorbeur (2) étant réalisés de manière adaptée aux passages (7) du boîtier (3).

9. Capteur solaire selon l'une quelconque des revendications 1 à 8,
**caractérisé en ce que** l'absorbeur (2) est réalisé entièrement ou dans des régions partielles de manière à pouvoir être enroulé ou de manière rigide et de manière sélective en tant que kit de construction.
